# EUROPEAN PATENT SPECIFICATION

(11) **EP 3 670 937 B1**
(45) Date of publication and mention of the grant of the patent: **22.03.2023**
(21) Application number: 18213469.2
(22) Date of filing: 18.12.2018
(51) Int. Cl.: F16B 21/08, F16B 2/24

(54) **A RETAINING CLIP FOR CONNECTING COMPONENTS**
SICHERUNGSCLIP ZUR VERBINDUNG VON KOMPONENTEN
PINCE DE RETENUE POUR CONNECTER DES COMPOSANTS

(43) Date of publication of application: 24.06.2020
(73) Proprietor: Volvo Car Corporation, 405 31 Göteborg (SE)
(72) Inventor: THORBJÖRNSEN, Thomas, 423 47 Torslanda (SE)
(74) Representative: Kransell & Wennborg KB

(56) References cited:
- DE-A1-102017 001 124
- DE-B- 1 157 434
- US-A- 2 198 186
- US-A- 2 979 795

## Description

### Field of the Invention

The present disclosure relates to retaining clip for connecting to a component.

### Background

The assembly of some vehicle parts such as hard trim parts is subject to various requirements. Exemplary vehicle parts are the interior panels which are releasably attached to the vehicle beams or cross-members.

For the connection of such vehicle parts to the vehicle body different types of clips are often used. The clip may require a relatively high assembly force in order to be attached to the vehicle body. A too high assembly force is not only inconvenient for the assembly personnel, it may also exceed legal requirements related to the working conditions for the personnel. An example clip is a so-called "omega-clip".

In contrast, a too low assembly force may lead to a too weak connection which may result in disturbing vibrations of the assembled components when the vehicle is travelling. Furthermore, a too weak connection may not be able to retain the connected component which therefore risks coming loose in the event of a vehicle collision which could cause injury to the occupants of the vehicle. Thus, there is also a lower bound for the assembly force so that the clip satisfies legal requirements related to maintaining interior panels or components in place in the event of a vehicle collision.

It has proven to be challenging to provide a clip which satisfies the above requirements and there is therefore room for improvements with regards to such clips.

### Summary

The present disclosure describes a retaining clip which is adapted to provide at least adequate assembly strength while requiring less force for assembly, thereby improving the ergonomics for the assembly personnel.

The proposed retaining clip provides this advantage at least partly by a protrusion included in each of two resilient legs of the retaining clip.

The resilient legs are compressible towards each other so that they may be forced into a receiving connection of a component to be connected. The shape of the retaining clip is such that as the legs are forced into the receiving connection they are further compressed towards each other by the contact with the receiving connection of the connecting component. The retaining clip is shaped such that when the retaining clip is sufficiently far into the receiving connection the compression force is relieved and the resilient legs are resiliently moved away from each other whereby the resilient legs engage in the receiving connection, which often includes a compartment or cavity adapted to receive the resilient legs.

Generally, the corresponding engaging force in the receiving connection is approximately proportional to the force required to compress the resilient legs. With prior art clips, the force required for compressing the resilient legs and the force for forcing it into the receiving connection are relatively high in order to fulfill the legal requirements in the event of a vehicle collision and to reduce the unwanted vibrations between the connected components. A prior art clip is shown in DE102017001124 A1.

The protrusions of the herein disclosed retaining clip provides the engaging connection in the receiving connection member, which leads to that the force required for compressing the resilient legs and the force for the insertion into the receiving connection member can be reduced, compared to prior art clips. The protrusions provide a widening shape of the retaining clip and are also resilient. Thus, as the resilient legs are forced into the receiving connection, the protrusions are also compressed by the contact with the resilient connection until the protrusions has moved sufficiently far into the receiving connection, whereby they spring back and engage in the receiving connection. The compression of the resilient legs with the protrusions requires less force than without the protrusions. Without the protrusions the resilient legs need to be more spaced apart in order to provide a sufficiently strong connection. Accordingly, with the protrusions, less force is needed for engaging the retaining clip in the receiving connection.

In one embodiment, the protrusions may be gradually increasing in size further from the distal side of the clip where the resilient legs connect. The gradual increase provides the advantage that the force transfer from the receiving connection member as the resilient legs are forced therein is improved whereby the force required by assembly personnel can be significantly reduced.

The protrusion may for example be configured to be slidable against a contact surface in the receiving connection when inserting the resilient legs into the receiving connection, wherein the resilient legs are compressed by the sliding contact.

Furthermore, the protrusion may include a guiding portion configured to be slidable against a contact surface in the receiving connection when withdrawing the resilient legs from the receiving connection, wherein the resilient legs are compressed by the contact between the guiding portion and the contact surface. In this way, the removal of the retaining clip from the receiving connection member may be improved, while still providing a sufficiently strong connection. The guiding portion is also angled so that the retaining clip is sufficiently strongly engaged in the receiving connection, but still allows for withdrawal of the retaining clip.

Further features of, and advantages with, the present invention will become apparent when studying the appended claims and the following description. The skilled person realize that different features of the present invention may be combined to create embodiments other than those described in the following.

### Brief Description of the Drawings

These and other aspects of the present invention will now be described in more detail, with reference to the appended drawings showing example embodiments of the invention, wherein:
Fig. 1A-G illustrates the insertion of an example conceptual retaining clip into a receiving connection member;
Fig. 2A-B are perspective views of an example conceptual retaining clip;
Fig. 3 illustrates the withdrawal of an example conceptual retaining clip from a receiving connection member;
Fig. 4 is a flow-chart of method steps for manufacturing of a retaining clip as disclosed herein; and
Fig. 5 is a perspective view of an example conceptual retaining clip.

### Detailed Description of Example Embodiments

In the present detailed description, various embodiments of the retaining clip according to the present invention are described. However, this invention may be embodied in many different forms and should not be construed as limited to the embodiments set forth herein; rather, these embodiments are provided for thoroughness and completeness. Like reference characters refer to like elements throughout.

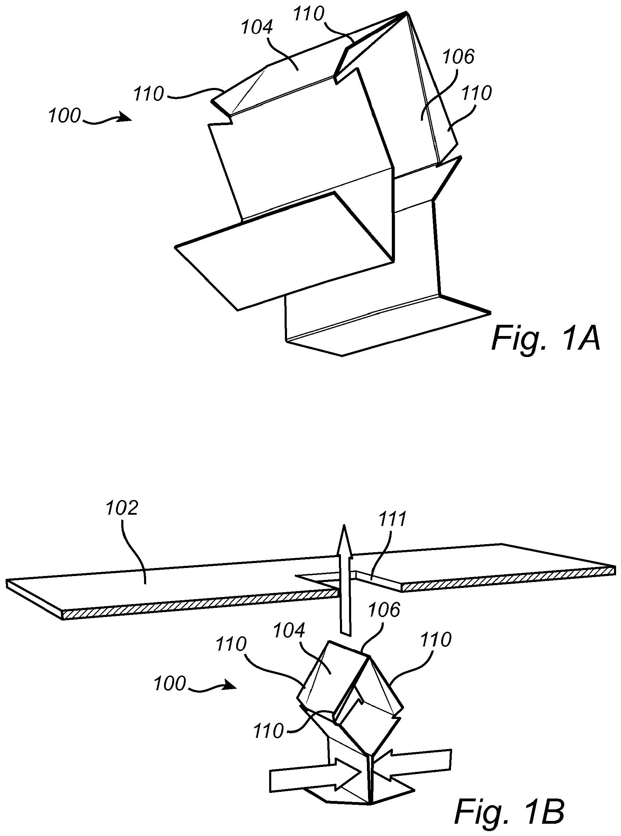

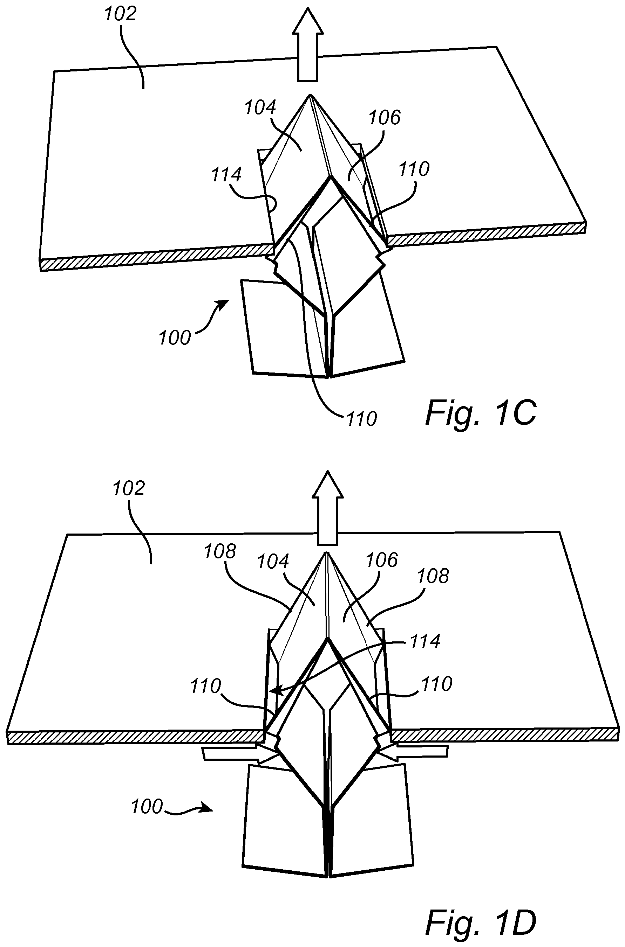

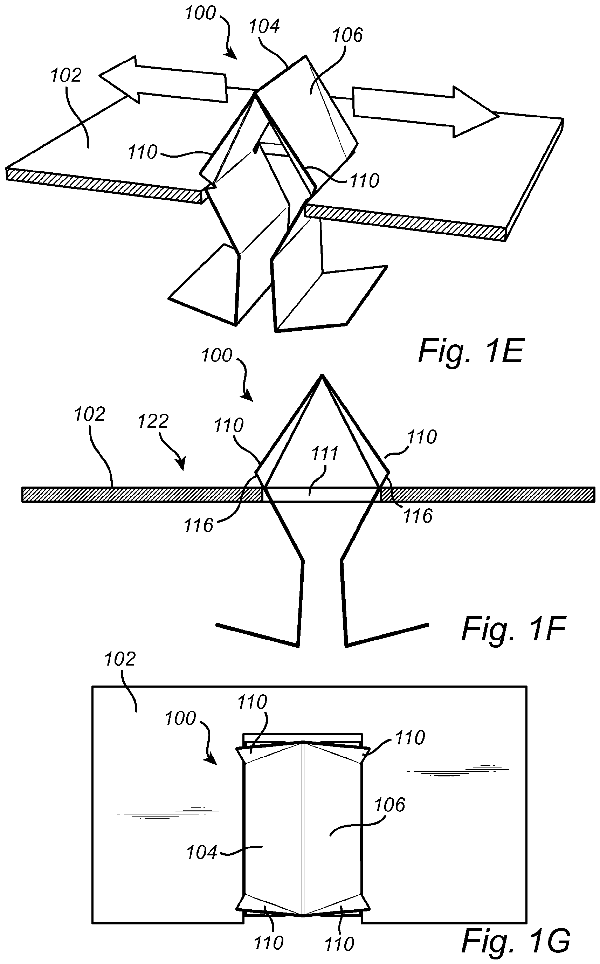

Fig. 1A-G schematically illustrates the insertion of a conceptual retaining clip 100 into a receiving connection member 102. The retaining clip 100 comprises a first resilient leg 104 and a second resilient leg 106. As illustrated in fig. 1B, the first resilient leg 104 and the second resilient leg 106 are compressible towards each other for the insertion into the receiving connection member 102. Further, as shown in figs. 1C-D, when the retaining clip 100 is pushed against the receiving connection member 102, fig. 1C, and further forced into the receiving connection member 102, fig. 1D, the first resilient leg 104 and the second resilient leg 106 are further compressed towards each other. The first resilient leg 104 and the second resilient leg 106 engage in the receiving connection member 102 by a resulting resilient motion of the first resilient leg 104 and the second resilient leg 106 away from each other when they have reach sufficiently far into the receiving connection member 102, fig. 1E-F.

Each resilient leg 104, 106 includes at least one protrusion 110 configured to engage in the receiving connection member 102. As shown in figs. 1E-G, the first resilient leg 104 and the second resilient leg 106 engage in the receiving connection member 102 when the protrusions 110 of the retaining clip 100 have reached inside the receiving connection member 102, i.e. past the inlet 111 including the contact surface 114 between the protrusions 110 and the receiving connection member 102.

Accordingly, as illustrated in figs. 1E-G as the protrusions 110 passes past the inlet 111 to the receiving connection member 102, the protrusions 110 provide an engaging connection so that the retaining clip 100 does not fall out of the receiving connection member 102. The protrusions 110 provide the advantage that the width of the retaining clip 100 can be made smaller compared to prior art clips. This means that the force required for pushing the herein disclosed retaining clip into the receiving connection member 102 is less than for prior art clips, i.e. prior art omega-clips.

The protrusions 110 provide a widening shape of the retaining clip 100 and are also resilient. Thus, as the resilient legs 104, 106 are forced into the receiving connection 102, the protrusions 110 are also compressed by the contact with the contact surface 114 of the receiving connection member 102 until the protrusions 110 has moved sufficiently far into the receiving connection 102, past the inlet 111. Then, the protrusions 110 spring back and engage in the receiving connection 102. The compression of the protrusions 110 require less force than compressing resilient legs without protrusions, thus less force is needed for engaging the retaining clip in the receiving connection.

Preferably, the first resilient leg 104 and the second resilient leg 106 each comprises a pair of protrusions 110 as is illustrated in e.g. fig. 1A and fig. 1G. This provides a stronger and more stable engaging connection with the receiving connection member 102. The pairs of protrusions 110 are advantageously symmetrically arranged on the resilient legs 104, 106 in order to provide a well aligned connection between components connected by the retaining clip 100.

Fig. 1F is a side-view of the conceptual retaining clip 100 when engaged in the receiving connection member 102 and fig. 1G illustrates the retaining clip 100 engaged in the receiving connection member 102 from above. The protrusions 110 can here more clearly be seen to provide an engaging connection so that the retaining clip 100 does not fall out of the receiving connection member 102.

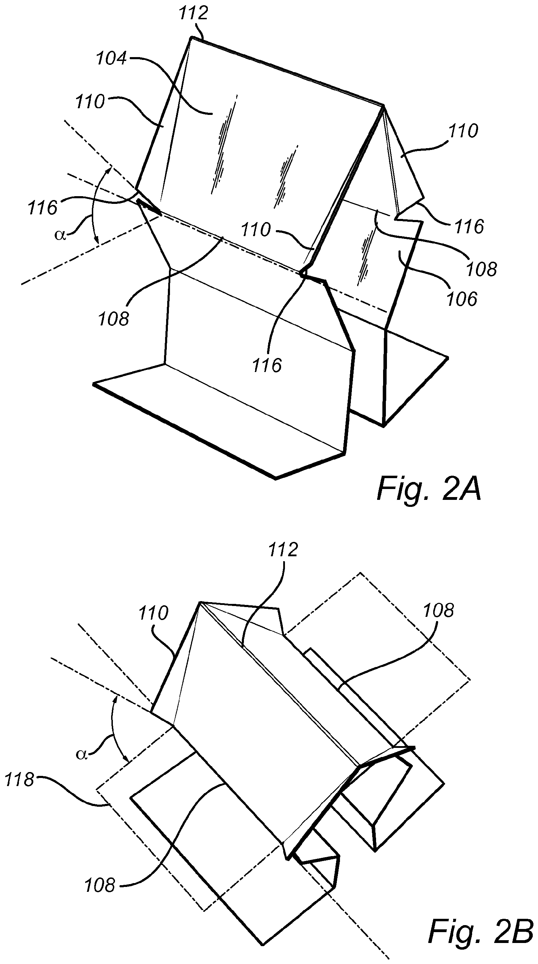

Fig. 2A-B are a perspective views of the retaining clip 100 comprising the protrusions 110 on either resilient leg 104 and 106. The protrusions 110 are gradually increasing in size further from the distal side 112 of the clip 100 where the resilient legs 104, 106 connect, see also e.g. fig. 1F and fig. 1G. In other words, the width of the retaining clip 200 further from the distal side 112, including the protrusions, increases not only due to the shapes of the legs 104, 106 themselves, but also due to the increasing size of the protrusions 110 further from the distal side 112. The gradual increase in size of the protrusions 110 provides a faster increase in width of the retaining clip, but at the same time allows for the resilient legs 104 and 106 to be closer to each other in the non compressed state. This advantageously reduces the force required for mounting the retaining clip in the receiving member 102.

The resilient legs 104 and 106 are shaped to form a hip portion 108 where the legs are further apart than corresponding neighboring portions of the resilient legs. The widest part of the gradually increasing sized protrusions 110 are located on the hip portion. This provides an improved engaging force when the retaining clip is engaged in the receiving connection member.

Furthermore, as illustrated in figs. 1C-D, the protrusion 110 are configured to be slidable against a contact surface 114 in the receiving connection 102 when inserting the resilient legs 104, 106 into the receiving connection 102, wherein the resilient legs including the protrusions 110 are compressed by the sliding contact. Accordingly, the protrusions 110 are the contact interface with the contact surface 114 of the receiving connection 102. The contact surface 114 is the opening perimeter in the receiving connection 102. As the protrusions 110 have slid past the inlet 111 the resilient legs 104, 106 including the protrusions 110 push outwards and the retaining clip is engaged in the receiving connection 102, see fig. 1E.

With further reference to fig. 2A-B, the protrusions 110 include a guiding portion 116 configured to be slidable against the contact surface 114 in the receiving connection 102 when withdrawing the resilient legs 104, 106 from the receiving connection 102. The resilient legs 104 and 106 are compressed by the contact between the guiding portion and the contact surface. The guiding portion 116 facilitates the withdrawal of the resilient legs 104, 106 from the receiving connection 102.

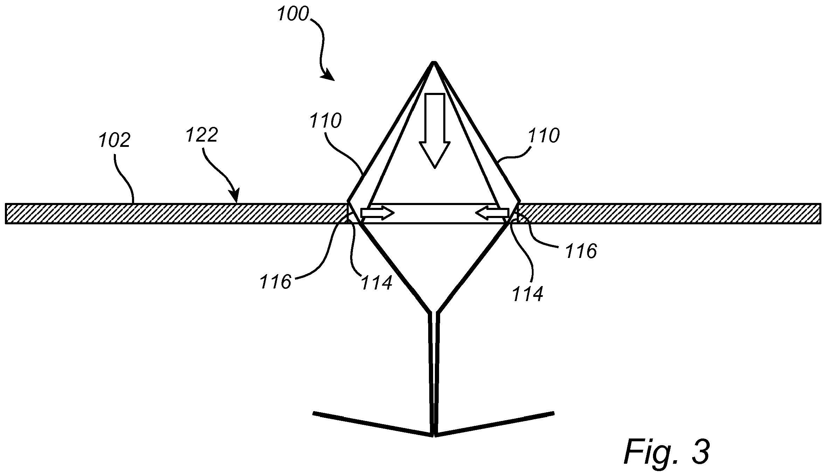

As illustrated in fig. 3, the guiding portion 116 is configured to slide against the contact surface 114 in the inlet of the receiving connection 102 as the resilient legs 104, 106 are withdrawn from the receiving connection 102. The guiding portion 116 is configured so that the resilient legs 104, 106 are compressed by the sliding contact between the guiding portion 116 and the contact surface 114.

In order to further facilitate the withdrawal of the resilient legs from a receiving connection, an angle α between the guide portion 116 and a horizontal plane 118 of the retaining clip intercepting the end portion of each guide portion is adapted to be larger than zero as illustrated in fig. 1F and fig. 3. In other words, the guide portion 116 is inclined with respect to an inner plane 122 of the receiving connection 102. The angle α is adapted such that the engaging force of the retaining clip in the receiving connection member 102 is sufficiently strong, but also so that the retaining clip can be withdrawn form the receiving connection member 102 with reasonable force.

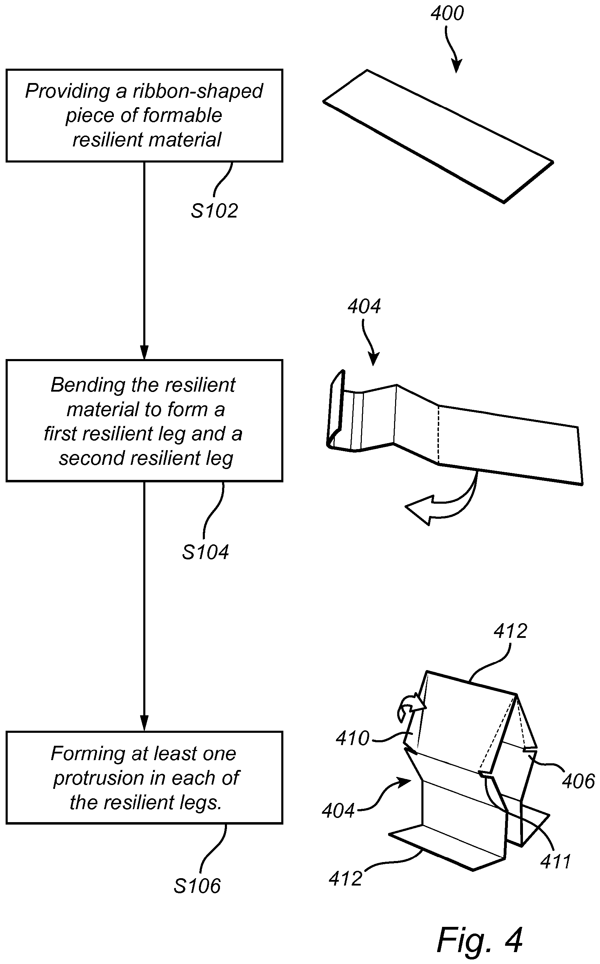

Fig. 4 is a flow-chart of method steps according to embodiments of the invention. Firstly S102, a ribbon-shaped piece 400 of formable resilient material is provided. The resilient material may be for example spring steel. The ribbon-shaped piece 400 of formable resilient material is bent S104 to form a first resilient leg 404 and a second resilient leg 406. At least one protrusion 410 is formed S106 in each of the resilient legs.

The protrusions 410 may be formed by making a cut 411 in each of the first resilient leg 404 and the second resilient leg 406. From the cut 411 it is possible to bend part of the resilient legs 404 and 406 so that the protrusion is formed. In other words, forming the protrusions 410 comprises making a cut 411 for each protrusion in each of the resilient legs; and bending the resilient leg at the cut for forming a wing-shaped protrusion 410 with gradually increasing size from the distal side 412 of the clip where the resilient legs 404, 406 connect. The protrusions 410 protrude in the width direction of the retaining clip 400.

The cut 411 is inclined with respect to the resilient leg. In this way is a guiding portion formed which is configured to be slidable against a contact surface in the receiving connection when withdrawing the resilient legs 404, 406 from a receiving connection. The inclined guiding portion is adapted so that the resilient legs are compressed by the contact between the guiding portion and the contact surface.

Furthermore, it may be included to form a connection portion 412 configured to provide a connection to a clip holder (not shown) comprised in a further component to be connected to on the connection portion 412 side of the retaining clip 400.

It is included to bend each of the resilient legs to form a hip portion where the resilient legs are further apart than corresponding neighboring portions of the resilient legs.

The protrusions are in the above drawings illustrated formed as wings or to be wing-shaped. This shape is relatively easy to manufacture and provides the mechanical properties for ensuring a sufficiently secure connection while at the same time not requiring excessive force for insertion or removal of the retaining clip from a receiving connection.

The resilient legs may form a tapered shape with the wider portion at the hip portion and the narrow portion where the resilient legs meet. The resilient legs form a further tapered shape with the wider portion at the hip portion and a further narrow portion at the connection portion configured to connect to the receiving connection. The retaining clip may be omegashaped, i.e. provided as an omega-clip with the protrusions.

The person skilled in the art realizes that the present invention by no means is limited to the preferred embodiments described above. On the contrary, many modifications and variations are possible within the scope of the appended claims.

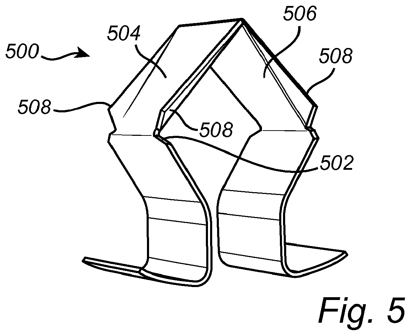

For example, in the depicted embodiments a cut is generally shown for enabling the protrusion 110. The cut may be replaced by for example a notch, i.e. a cut-out portion in the resilient legs. This notch 502 is exemplified in fig. 5 where another example retaining clip 500 is shown. The retaining clip 500 comprises a first resilient leg 504 and a second resilient leg 506 as described with reference to preceding drawings. Each resilient leg includes at least one protrusion 508 configured to engage in the receiving connection member. The protrusions 508 are formed by forming a notch 502 in each of the first resilient leg 504 and the second resilient leg 506. From the notch 502 it is possible to bend part of the resilient legs 504 and 506 so that the protrusion is formed.

In the claims, the word "comprising" does not exclude other elements or steps, and the indefinite article "a" or "an" does not exclude a plurality. A single processor or other unit may fulfill the functions of several items recited in the claims. The mere fact that certain measures are recited in mutually different dependent claims does not indicate that a combination of these measured cannot be used to advantage. Any reference signs in the claims should not be construed as limiting the scope.

## Claims

1. A retaining clip (100;500) for connecting to a component, the retaining clip comprising:
- a first resilient leg (104;504) and a second resilient leg (106;506) adapted to be compressible towards each other for insertion into a receiving connection member (102) of the component, and to engage with the receiving connection member by a resulting relative resilient motion of the first resilient leg and the second resilient leg away from each other,
- wherein each resilient leg includes at least one protrusion (110;508) configured to engage in the receiving connection member,
wherein the resilient legs are shaped to form a hip portion where the legs are further apart than corresponding neighboring portions of the resilient legs,
wherein the protrusions are located on the hip portion.

2. The retaining clip according to claim 1, wherein the first resilient leg and the second resilient leg each comprises a pair of protrusions.

3. The retaining clip according to claim 2, wherein the pairs of protrusions are symmetrically arranged on the resilient legs.

4. The retaining clip according to any one of the preceding claims, wherein the protrusions are gradually increasing in size further from the distal side of the clip where the resilient legs connect.

5. The retaining clip according to claim 4, wherein the protrusion is configured to be slidable against a contact surface in the receiving connection when inserting the resilient legs into the receiving connection, wherein the resilient legs are compressed by the sliding contact.

6. The retaining clip according to any one of the preceding claims, wherein the protrusion includes a guiding portion configured to be slidable against a contact surface in the receiving connection when withdrawing the resilient legs from the receiving connection, wherein the resilient legs are compressed by the contact between the guiding portion and the contact surface.

7. The retaining clip according to claim 6, wherein an angle (α) between the guide portion and a horizontal plane of the retaining clip intercepting the end portion of each guide portion is larger than zero.

8. The retaining clip according to claim 7, wherein the angle is larger than 20 degrees.

9. The retaining clip according to any one of claims 4 to 8, wherein the protrusions are formed as wings.

10. The retaining clip according to any one of the preceding claims, wherein each resilient leg includes a connection portion configured to provide a connection to a further component.

11. The retaining clip according to any one of the preceding claims, wherein the retaining clip is made in one piece.

12. The retaining clip according to any one of the preceding claims, wherein the resilient legs are shaped as ribbons.

13. A method for manufacturing a retaining clip adapted to connect to a component, the method comprising:
- providing (S102) a ribbon-shaped piece of formable resilient material;
- bending (S104) the resilient material to form a first resilient leg and a second resilient leg, wherein the resilient legs are shaped to form a hip portion where the legs are further apart than corresponding neighboring portions of the resilient legs;
- forming (S106) at least one protrusion in each of the resilient legs, wherein the protrusions are located on the hip portion.

## Patentansprüche

1. Sicherungsclip (100; 500) zum Verbinden mit einer Komponente, wobei der Sicherungsclip Folgendes umfasst:
- einen ersten elastischen Schenkel (104; 504) und einen zweiten elastischen Schenkel (106; 506), die dazu eingerichtet sind, zum Einsetzen in ein aufnehmendes Verbindungselement (102) der Komponente zusammendrückbar zu sein und durch eine sich ergebende relative elastische Bewegung des ersten elastischen Schenkels und des zweiten elastischen Schenkels voneinander weg in das aufnehmende Verbindungselement einzugreifen,
- wobei jeder elastische Schenkel mindestens einen Vorsprung (110; 508) umfasst, der dazu ausgelegt ist, in das aufnehmende Verbindungselement einzugreifen,
wobei die elastischen Schenkel dazu geformt sind, einen Hüftabschnitt auszubilden, in dem die Schenkel weiter voneinander entfernt sind als in entsprechenden angrenzenden Abschnitten der elastischen Schenkel,
wobei sich die Vorsprünge am Hüftabschnitt befinden.

2. Sicherungsclip nach Anspruch 1, wobei der erste elastische Schenkel und der zweite elastische Schenkel jeweils ein Paar Vorsprünge umfassen.

3. Sicherungsclip nach Anspruch 2, wobei die Paare von Vorsprüngen an den elastischen Schenkeln symmetrisch angeordnet sind.

4. Sicherungsclip nach einem der vorstehenden Ansprüche, wobei die Vorsprünge von der distalen Seite des Clips, wo die elastischen Schenkel verbunden sind, zunehmend größer werden.

5. Sicherungsclip nach Anspruch 4, wobei der Vorsprung dazu ausgelegt ist, gegen eine Kontaktfläche in der Aufnahmeverbindung verschiebbar zu sein, wenn die elastischen Schenkel in die Aufnahmeverbindung eingesetzt werden, wobei die elastischen Schenkel durch den Schiebekontakt zusammengedrückt werden.

6. Sicherungsclip nach einem der vorstehenden Ansprüche, wobei der Vorsprung einen Führungsabschnitt umfasst, der dazu ausgelegt ist, gegen eine Kontaktfläche in der Aufnahmeverbindung verschiebbar zu sein, wenn die elastischen Schenkel aus der Aufnahmeverbindung entnommen werden, wobei die elastischen Schenkel durch den Kontakt zwischen dem Führungsabschnitt und der Kontaktfläche zusammengedrückt werden.

7. Sicherungsclip nach Anspruch 6, wobei ein Winkel (α) zwischen dem Führungsabschnitt und einer horizontalen Ebene des Sicherungsclips, die den Endabschnitt jedes Führungsabschnitts schneidet, größer als Null ist.

8. Sicherungsclip nach Anspruch 7, wobei der Winkel größer als 20 Grad ist.

9. Sicherungsclip nach einem der Ansprüche 4 bis 8, wobei die Vorsprünge als Flügel ausgebildet sind.

10. Sicherungsclip nach einem der vorstehenden Ansprüche, wobei jeder elastische Schenkel einen Verbindungsabschnitt umfasst, der dazu ausgelegt ist, eine Verbindung zu einer weiteren Komponente vorzusehen.

11. Sicherungsclip nach einem der vorstehenden Ansprüche, wobei der Sicherungsclip einstückig gefertigt ist.

12. Sicherungsclip nach einem der vorstehenden Ansprüche, wobei die elastischen Schenkel bandförmig sind.

13. Verfahren zur Herstellung eines Sicherungsclips, der dazu eingerichtet ist, sich mit einer Komponente zu verbinden, wobei das Verfahren Folgendes umfasst:
- Vorsehen (S102) eines bandförmigen Stücks eines formbaren elastischen Materials;
- Krümmen (S104) des elastischen Materials, um einen ersten elastischen Schenkel und einen zweiten elastischen Schenkel auszubilden, wobei die elastischen Schenkel geformt sind, um einen Hüftabschnitt auszubilden, in dem die Schenkel weiter voneinander entfernt sind als in entsprechenden angrenzenden Abschnitten der elastischen Schenkel;
- Ausbilden (S106) mindestens eines Vorsprungs in jedem der elastischen Schenkel, wobei die Vorsprünge am Hüftabschnitt angeordnet sind.

## Revendications

1. Attache de retenue (100 ; 500) destinée à être raccordée à un composant, l'attache de retenue comprenant :
- une première patte élastique (104 ; 504) et une seconde patte élastique (106 ; 506) propres à être comprimées l'une vers l'autre à des fins d'insertion dans un élément de raccordement receveur (102) du composant, et à entrer en prise avec l'élément de raccordement receveur par un mouvement élastique relatif résultant d'éloignement mutuel de la première patte élastique et la seconde patte élastique,
- dans laquelle chaque patte élastique comprend au moins une saillie (110 ; 508) conçue pour entrer en prise dans l'élément de raccordement receveur,
dans laquelle les pattes élastiques sont façonnées de manière à former une partie renflée où les pattes sont davantage éloignées l'une de l'autre qu'au niveau de parties adjacentes correspondantes des pattes élastiques,
dans laquelle les saillies sont situées sur la partie renflée.

2. Attache de retenue selon la revendication 1, dans laquelle la première patte élastique et la seconde patte élastique comprennent chacune une paire de saillies.

3. Attache de retenue selon la revendication 2, dans laquelle les paires de saillies sont agencées symétriquement sur les pattes élastiques.

4. Attache de retenue selon l'une quelconque des revendications précédentes, dans laquelle la taille des saillies augmente progressivement en s'éloignant du côté distal de l'attache où les pattes élastiques sont raccordées.

5. Attache de retenue selon la revendication 4, dans laquelle la saillie est conçue pour être apte à glisser contre une surface de contact dans l'élément de raccordement receveur lors de l'insertion des pattes élastiques dans l'élément de raccordement receveur, dans laquelle les pattes élastiques sont comprimées par le contact à glissement.

6. Attache de retenue selon l'une quelconque des revendications précédentes, dans laquelle la saillie comprend une partie de guidage conçue pour être apte à glisser contre une surface de contact dans l'élément de raccordement receveur lors du retrait des pattes élastiques depuis l'élément de raccordement receveur, dans laquelle les pattes élastiques sont comprimées par le contact entre la partie de guidage et la surface de contact.

7. Attache de retenue selon la revendication 6, dans laquelle un angle (α) entre la partie de guidage et un plan horizontal de l'attache de retenue croisant la partie d'extrémité de chaque partie de guidage est supérieur à zéro.

8. Attache de retenue selon la revendication 7, dans laquelle l'angle est supérieur à 20 degrés.

9. Attache de retenue selon l'une quelconque des revendications 4 à 8, dans laquelle les saillies sont réalisées sous la forme d'ailettes.

10. Attache de retenue selon l'une quelconque des revendications précédentes, dans laquelle chaque patte élastique comprend une partie de raccordement conçue pour permettre un raccordement à un autre composant.

11. Attache de retenue selon l'une quelconque des revendications précédentes, l'attache de retenue étant réalisée d'un seul tenant.

12. Attache de retenue selon l'une quelconque des revendications précédentes, dans laquelle les pattes élastiques sont réalisées sous la forme de rubans.

13. Procédé de fabrication d'une attache de retenue propre à être raccordée à un composant, le procédé comprenant :
- préparer (S102) une pièce de matériau élastique façonnable en forme de ruban ;
- cintrer (S104) le matériau élastique pour former une première patte élastique et une seconde patte élastique, les pattes élastiques étant façonnées de manière à former une partie renflée où les pattes sont davantage éloignées l'une de l'autre qu'au niveau de parties adjacentes correspondantes des pattes élastiques ;
- former (S106) au moins une saillie dans chacune des pattes élastiques, les saillies étant situées sur la partie renflée.
